(19) Europäisches Patentamt

European Patent Office

Office européen des brevets

(11) Veröffentlichungsnummer: **0 036 146**
**B1**

# (12) EUROPÄISCHE PATENTSCHRIFT

(45) Veröffentlichungstag der Patentschrift:
**01.08.84**

(21) Anmeldenummer: **81101649.2**

(22) Anmeldetag: **06.03.81**

(51) Int. Cl.³: **H 04 Q 7/04**

---

(54) **Mobiles Funknetz.**

---

(30) Priorität: **11.03.80 DE 3009309**

(43) Veröffentlichungstag der Anmeldung:
**23.09.81 Patentblatt 81/38**

(45) Bekanntmachung des Hinweises auf die Patenterteilung:
**01.08.84 Patentblatt 84/31**

(84) Benannte Vertragsstaaten:
**AT BE CH DE FR GB IT LI LU NL SE**

(56) Entgegenhaltungen:
**DE - A - 2 537 683**
**DE - B - 2 659 635**

(73) Patentinhaber: **SIEMENS AKTIENGESELLSCHAFT,**
**Berlin und München Wittelsbacherplatz 2,**
**D-8000 München 2 (DE)**

(72) Erfinder: **Kammerlander, Karl, Wiesenstrasse 10,**
**D-8190 Wolfratshausen (DE)**
Erfinder: **Hechfellner, Kurt, Dipl.-Ing., Birkenstrasse 113,**
**D-8018 Taufkirchen (DE)**

## Beschreibung

Die Erfindung bezieht sich auf ein mobiles Funknetz mit netzweiter Synchronisation mit einer Anzahl Funkkonzentratoren in gegenseitiger räumlicher Anordnung nach Art eines Cellularsystems mit sich überlappenden Funkbereichen, die durch die ihnen im Rahmen des Cellularsystems zugeteilten Frequenzkanäle bestimmt sind, bei dem jeweils eine fest vorgegebene Anzahl von einander unmittelbar benachbarten Funkbereichen eine Funkbereichsgruppe bilden, in denen sich die insgesamt zur Verfügung stehenden Frequenzkanäle wiederholen, bei dem ferner der Frequenzverteilungsplan für die Funkkonzentratoren so festgelegt ist, dass Gleichkanalstörungen im jeweiligen Funkbereich einschliesslich einer erweiterten Randzone weitgehend ausgeschlossen sind, und bei dem wenigstens die Signalisierung in digitaler Form zwischen den ortsfesten Funkkonzentratoren und den beweglichen Teilnehmerstationen über für Duplexbetrieb ausgelegte Organisationskanäle vorgenommen ist.

Ein mobiles Funknetz dieser Art ist beispielsweise durch die DE-B-26 59 635 bekannt. Jeder Funkkonzentrator verfügt bei diesem bekannten Funknetz über einen zentralen Organisationskanal, in dem die Informationen der verschiedenen Organisationsfunktionen, wie Kennung, Anmeldung, Ummeldung, Anwesenheitsprüfung, Belegung und Ruf zeitgestaffelt übertragen werden. Die digitale Form dieser Information gibt ein Höchstmass an Resistenz und ermöglicht darüber hinaus ein direktes Mass für die Verbindungsqualität, bzw. den jeweiligen Geräuschabstand, über eine Messung des Phasenjitters zu erhalten. Für die Aufrechterhaltung eines ungestörten Betriebs müssen die Teilnehmerstationen bei dem bekannten System neben dem Organisationskanal des Funkkonzentrators, bei dem sie angemeldet sind, ständig auch die Organisationskanäle benachbarter Funkbereiche überwachen, um sich notfalls über einen anderen Funkkonzentrator anzumelden, wenn im funkbereichsüberschreitenden Verkehr die Verbindung zum Funkkonzentrator unbrauchbar wird. Dies bedeutet einen nicht unerheblichen Aufwand an Steuer- und Schaltmitteln bei den beweglichen Teilnehmerstationen.

Ferner ist durch die DE-A-2 537 683 ein Funkübertragungssystem mit ortsfesten Funkstationen und beweglichen Teilnehmerstationen bekannt, bei dem die Funkkanäle als Duplexkanäle im Unter- und Oberband mit vorgegebenem Gegensprechabstand betrieben werden, bei dem alle Kanäle im Frequenzmultiplex angeordnet sind und jeweils den gleichen konstanten Kanalabstand voneinander haben und bei dem die räumliche Kanalzuteilung zu den ortsfesten Funkstationen kanalgruppenweise nach einem Rautenplanverfahren erfolgt. Aufgrund besonderer Selektionsmerkmale wird jedem der sich wiederholenden Funkverkehrsbereiche ein Duplexsignalisierungskanal zur Signalübertragung und zum Informationsaustausch zwischen ortsfesten und beweglichen Funkstationen sowohl im Ruhezustand als auch beim Verbindungsaufbau von und zu den Fahrzeugstationen zugeordnet. Als besonderes Selektionsmerkmal wird dabei das asynchrone Zeitmultiplex oder das Codemultiplex verwendet.

Der Erfindung liegt die Aufgabe zugrunde, für ein mobiles Funknetz der einleitend geschilderten Art eine weitere Lösung für die Übertragung der die Organisationsfunktionen beinhaltenden Informationen zwischen den Funkkonzentratoren und den beweglichen Teilnehmerstationen anzugeben, die insbesondere auf seiten der Teilnehmerstationen mit einem wesentlich geringeren Aufwand an Steuer- und Umschaltmitteln auskommt, und zwar unter Einbeziehung der für den bereichsüberschreitenden Verkehr notwendigen Trends der Veränderungen der Erreichbarkeit infolge der eigenen Fahrzeugbewegung.

Diese Aufgabe wird gemäss der Erfindung dadurch gelöst, dass den Funkkonzentratoren mehrerer Funkbereichsgruppen wenigstens ein Organisationskanal gemeinsam zugeordnet ist, der als Mehrfachzugriffkanal mit einem periodischen Rahmen gestaltet ist, dass ferner dieser Rahmen wenigstens eine der Anzahl der Funkbereiche einer Funkbereichsgruppe entsprechende Zahl aufeinanderfolgender Zeitschlitze umfasst und jeder der Zeitschlitze gleichzeitig einem solchen Funkbereich mehrerer Funkbereichsgruppen für die Übermittlung funkbereichsbezogener Informationsblöcke zugeordnet ist, der gegenüber dem entsprechenden Funkbereich der anderen Funkbereichsgruppen funktechnisch ausreichend entkoppelt ist.

Der Erfindung liegt die Erkenntnis zugrunde, dass in einem nach Art eines Cellularsystems aufgebauten Mobilfunknetz die jeweils gleiche Frequenzkanäle benutzenden Funkbereiche verschiedener Funkbereichsgruppen funktechnisch voneinander ausreichend entkoppelt sind, so dass für die verschiedenen Funkbereichsgruppen ein und derselbe Organisationskanal gleichzeitig dann verwendet werden kann, wenn zu einem vorgegebenen Zeitschlitz innerhalb des Rahmens dieses Organisationskanals jeweils nur solche Funkbereiche verschiedener Funkbereichsgruppen gleichzeitig mit ihren Informationsblöcken zugreifen, die entsprechend dem Frequenzverteilungsplan in diesem Cellularsystem jeweils gegeneinander funktechnisch ausreichend entkoppelt sind.

Zweckmässig übersteigt die Anzahl der Zeitschlitze eines Rahmens des Organisationskanals die Anzahl der Funkbereiche einer Funkbereichsgruppe. Die hierdurch erhaltene Reserve von einem oder mehreren Zeitschlitzen gibt die Möglichkeit, an funkgeografisch ungünstigen Orten Funkbereiche mit relativ kleinen Sendeleistungen der Funkkonzentratoren überschneidungsfrei einzufügen, wobei die Zahl der Einfügungen pro Funkbereichsgruppe aufgrund der kleinen Leistungen relativ hoch sein kann. Ein oder mehrere Reservezeitschlitze ermöglichen aber auch, sofern dies erforderlich ist, einen Kapazitätszuschlag zu einem oder mehreren der Funkbereiche innerhalb einer Funkbereichsgruppe.

In bestimmten Grenzgebieten eines mobilen Funknetzes, wie es dem Erfindungsgegenstand zugrundeliegt, besteht die Notwendigkeit, den vorgegebenen Frequenzabstand der beiden Frequenzen des Frequenzkanalpaares des Organisationskanals zu ändern. In diesem Zusammenhang ist es vorteilhaft, für die aufeinanderfolgenden Rahmen des Organisationskanals in der einen Übertragungsrichtung von denen in der anderen Übertragungsrichtung einen gegenseitigen Zeitversatz vorzusehen, der die Grösse eines Zeitschlitzes übersteigt. Auf diese Weise ist es nämlich möglich, das Umschalten des Synthesizers beim Funkkonzentrator und bei den beweglichen Teilnehmerstationen in Abhängigkeit eines Überganges von Senden auf Empfangen und umgekehrt durchzuführen, ohne dass an die Umschaltgeschwindigkeit dieser Synthesizer besondere Anforderungen gestellt werden müssen. Bei einer bevorzugten Ausführungsform ist dieser Zeitversatz zwei Zeitschlitze gross.

Um den Organisationskanal im Hinblick auf eine möglichst flexible Weise für erforderliche Kapazitätsausweitungen der Funkbereiche zu gestalten, ist es sinnvoll, zwei und mehr aufeinanderfolgende Rahmen des Organisationskanals, zu einem Überrahmen zu gestalten. Auf diese Weise ist es möglich, dass ein Funkbereich einer Funkbereichsgruppe, bei beispielsweise einem Reservezeitschlitz pro Rahmen, zur Kapazitätsausweitung sämtliche Reservezeitschlitze innerhalb eines Überrahmens zusätzlich in Anspruch nehmen kann.

Der grosse Vorteil eines Organisationskanals mit Mehrfachzugriff, bei dem den Funkbereichen innerhalb einer Rahmenperiode aufeinanderfolgende Zeitschlitze zugeordnet sind, besteht unter anderem darin, dass der Organisationskanal von einer bei einem Funkbereich angemeldeten Teilnehmerstation ausser in dem diesem Funkbereich zugeordneten Zeitschlitz auch in den übrigen Zeitschlitzen zur Erkennung von Trends hinsichtlich der Erreichbarkeit benachbarter Funkbereiche und zur gegebenenfalls erforderlichen Ummeldung zu einem anderen Funkbereich abgehört werden kann.

In diesem Falle ist es sinnvoll, dass ein Funkbereich bei Erreichen seiner vollen Kapazitätsauslastung innerhalb des bzw. der ihm in einem Organisationskanal zugeordneten Zeitschlitze in diesen Zeitschlitzen eine Signalinformation überträgt, die einer sich anmeldenden Teilnehmerstation mitteilt, auf welchen weiteren Organisationskanal sie für die Anmeldung und den weiteren funkorganisatorischen Informationsaustausch überwechseln soll.

Um es in diesem Falle einem Funkbereich zu ermöglichen, innerhalb einer Rahmenperiode zwei und mehr einem Funkbereich einer Funkbereichsgruppe zugehörige Informationsblöcke in zeitlich voneinander getrennten Zeitschlitzen der zwei und mehr Organisationskanäle zu übertragen, ist es erforderlich, dass die Rahmen der zwei und mehr Organisationskanäle einen gegenseitigen Zeitversatz aufweisen.

Um auch in diesem Falle hohe Anforderungen an die Umschaltgeschwindigkeit der Synthesizer der Funkgarnituren zu vermeiden, ist es sinnvoll, zwischen den die Informationsblöcke eines bestimmten Funkbereiches innerhalb einer Rahmenperiode enthaltenden Zeitschlitzen von zwei und mehr Organisationskanälen jeweils eine Zeitlücke, beispielsweise in der Grösse eines Zeitschlitzes, vorzusehen.

Weitere vorteilhafte Ausgestaltungen der Erfindung sind in den Ansprüchen 6, 7 und 15 angegeben.

Anhand von in der Zeichnung dargestellten Ausführungsbeispielen soll die Erfindung im folgenden noch näher erläutert werden.

In der Zeichnung bedeuten

Fig. 1 die schematische Darstellung einer Funkbereichsgruppe,

Fig. 2 die schematische Darstellung eines aus mehreren Funkbereichsgruppen bestehenden Funknetzes nach Art eines Cellularsystems,

Fig. 3 die schematische Darstellung eines Ausführungsbeispieles der Rahmenfolge eines Organisationskanals nach der Erfindung,

Fig. 4 eine weitere Darstellung des Organisationskanals,

Fig. 5 die schematische Darstellung der beiden Übertragungswege eines Organisationskanals zwischen Funkkonzentrator und Teilnehmerstation in einem Blockschaltbild,

Fig. 6 ein erstes Ausführungsbeispiel für zwei Organisationskanäle nach der Erfindung,

Fig. 7 eine Darstellung der Zeitintervall-Frequenzumstimmung bei Verwendung von zwei Organisationskanälen nach Fig. 6,

Fig. 8 die Darstellungen von die Fig. 6 und 7 ergänzenden Zeitdiagrammen für die Synthesizerumschaltung,

Fig. 9 ein zweites Ausführungsbeispiel für zwei Organisationskanäle nach der Erfindung,

Fig. 10 eine schematische Darstellung der Zeitintervall-Frequenzumstimmung beim Ausführungsbeispiel mit zwei Organisationskanälen nach Fig. 9,

Fig. 11 ein Fig. 9 und 10 ergänzendes Zeitdiagramm der Synthesizerumschaltung,

Fig. 12 ein Ausführungsbeispiel für drei Organisationskanäle nach der Erfindung.

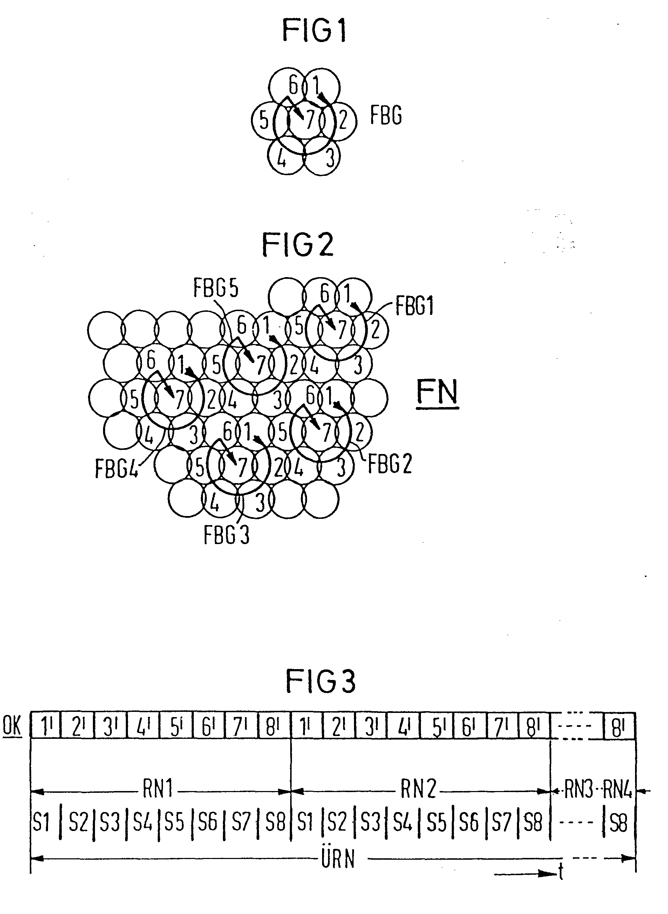

Die in Fig. 1 dargestellte Funkbereichsgruppe FBG besteht aus sieben Funkbereichen 1, 2, ...7, die sich in den Randzonen geringfügig überlappen und in deren Zentrum jeweils ein Funkkonzentrator angeordnet ist, der die räumliche Lage des betreffenden Funkbereichs bestimmt. Die Funkbereichsgruppe FBG stellt eine Organisationseinheit innerhalb des in Fig. 2 dargestellten Funknetzes FN dar. Dieses Funknetz FN umfasst hierbei fünf solcher Funkbereichsgruppen FBG1...FBG5. Innerhalb einer solchen Funkbereichsgruppe FBG können sämtliche innerhalb des Netzes verfügbaren Frequenzkanäle maximal einmal zugeteilt werden. Das Funknetz FN arbeitet mit einer netzweiten Synchronisation. Die Sprechkanäle und der wenigstens eine Organisationskanal sind für Duplexbetrieb ausgelegt, d.h., dass jedem Kanal ein Frequenzkanalpaar zugeordnet ist. Hierbei ist der gegenseitige Frequenzabstand zwischen den beiden Frequenzen eines Frequenzkanalpaares für alle Kanäle bis auf noch zu besprechende Ausnahmen konstant. Dies wird dadurch erreicht, dass von dem zur verfügung stehenden Frequenzvorrat, beispielsweise in einem Oberband von 461,3 bis 465,74 MHz und einem dem Oberband zugeordneten Unterband im Bereich von 451,3 bis 455,74 MHz, jeweils eine Frequenz gemeinsam ein Frequenzkanalpaar mit einem gegenseitigen Frequenzabstand von 10 MHz bilden. Das Frequenzraster im Ober- wie im Unterband weist dabei beispielsweise einen Rasterabstand von 20 kHz auf.

Wie Fig. 2 zeigt, sind die Funkbereichsgruppen FBG 1 ... FBG5 innerhalb des Funknetzes FN so angeordnet, dass die die gleiche Kennzahl aufweisenden Funkbereiche räumlich voneinander den grösstmöglichen Abstand haben. Der Frequenzverteilplan in einem solchen Funknezt entspricht dabei der Bezifferung der Funkbereiche, d.h., dass Funkbereichen mit der gleichen Kennzahl gleiche Frequenzkanäle zugeordnet sein können. Durch die räumliche Trennung dieser Funkbereiche mit gleicher Kennzahl werden auf diese Weise Gleichkanalstörungen auch bei eventuell auftretenden Überreichweiten mit Sicherheit unterbunden.

Nach der Erfindung ist nun einem solchen Funknetz FN nach Fig. 2 wenigstens ein Organisaionskanal OK zugeordnet, von dem eine zweckmässige Ausführungsform in Fig. 3 dargestellt ist. Der Überrahmen ÜRN dieses Organisationskanals besteht im Ausführungsbeispiel nach Fig. 3 aus vier Rahmen RN1, RN2, RN3 und RN4 mit jeweils acht Zeitschlitzen S1, S2... S8 für die Übertragung von Informationsblöcken 1', 2',..8' der Funkbereiche 1, 2...7 der Funkbereichsgruppen FBG1...FBG5. Die Informationsblöcke 1' 2'...7' sind hierbei entsprechend der Numerierung den Funkbereichen 1, 2...7 zugeordnet, während der Zeitschlitz S8 einen Informationsblock 8' hat, der entweder einem der Funkbereiche 1, 2...7 noch zusätzlich zur Verfügung gestellt oder aber für sonstige Signalübertragungen freigehalten werden kann. Eine Möglichkeit der Verwendung dieses Reservezeitschlitzes S8 besteht auch darin, an funkgeografisch ungünstigen Orten Funkbereiche mit relativ kleinen Sendeleistungen der Funkkonzentratoren überschneidungsfrei in den Organisationskanal einzufügen, wobei die Zahl der Einfügungen pro Funkbereichsgruppe auf Grund der kleinen Leistungen relativ hoch sein kann.

Der Organisationskanal OK nach Fig. 3 ist also, wie die in Fig. 2 angegebenen Pfeile verdeutlichen, hinsichtlich seiner Zeitschlitzzuweisung so gestaltet, dass bei der geografischen Numerierung der jeweils sieben Funkbereiche 1, 2...7 der verschiedenen Funkbereichsgruppen FBG1... FBG5 eine Zeitschlitzrotationsbewegung entsteht, die im gesamten Funknetz FN rotationssynchron abläuft. Damit ist die zeitliche Überschneidungsfreiheit gewährleistet und der räumliche Kanalwiederholabstand eingehalten. Somit können alle Funkbereiche 1 der verschiedenen Funkbereichsgruppen gleichzeitig zum Zeitschlitz S1, alle Funkbereiche 2 zum Zeitschlitz S2 usw. zugreifen, und in diesen Zeitschlitzen ihre funkbereichsbezogenen Informationsblöcke übertragen, ohne dass hierdurch gegenseitige Überschneidungen bzw. Übertragungsstörungen auftreten können.

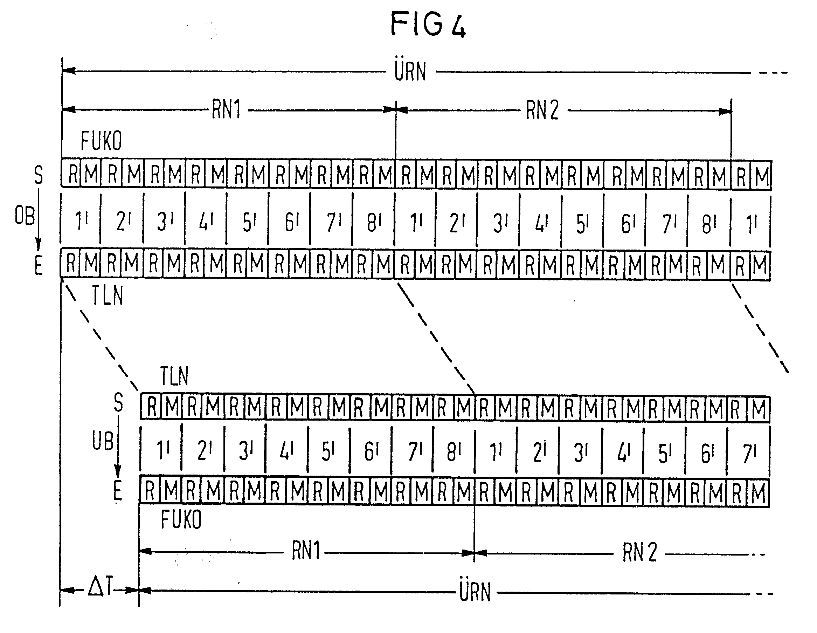

Bei einer Auslegung des Funknetzes für den Frequenzbereich um 450 MHz, beträgt die Länge eines Rahmens RN beispielsweise 600 ms, so dass sich für den vier Rahmen umfassenden Überrahmen ÜRN eine Periode von 2400 ms ergibt. Bei einer Aufteilung eines Rahmens RN in acht gleich grosse Zeitschlitze ergibt sich für einen Zeitschlitz eine Zeitdauer von 75 ms in der bei einer Bitrate von 5,28 Kbit/s 396 Bit in Form eines Informationsblocks übertragen werden können. Wie der in Fig. 4 dargestellte Organisationskanal erkennen lässt, ist jeder der Informationsblöcke 1', 2'...8' in zwei gleichlange Teilblöcke, nämlich einen Rufblock R und einen Meldeblock M unterteilt, die bei der beispielhaft angegebenen Zeitdauer eines Zeitschlitzes von 75 ms jeweils 37,5 ms gross sind. Der Rufblock dient dabei hauptsächlich dem Verbindungsaufbau, während der Meldeblock die notwendige Signalisierung für die Anwesenheitsprüfung darstellt.

Bei den in Fig. 4 dargestellten Rahmen RN1 und RN2 des Organisationskanals stellt das obere Teilbild das Senden S eines Funkkonzentrators FUKO und das Empfangen E der Teilnehmer TLN im Oberband OB und das untere Teilbild das Senden S der Teilnehmer TLN und das Empfangen E eines Funkkonzentrators FUKO im Unterband UB dar. Wie Fig. 4 weiter zeigt, haben die Rahmen RN des Organisationskanals im Oberband OB und im Unterband UB gegeneinander einen Zeitversatz $\Delta T$, dessen Dauer der Dauer zweier Zeitschlitze entspricht. Dieser Zeitversatz ermöglicht, sofern beim Übergang von Senden auf Empfangen oder umgekehrt ein Umschalten des Synthesizers der Funkgarnitur des Funkkonzentrators FUKO oder einer beweglichen Teilnehmerstation TLN erforderlich ist, nur geringe Anforderungen an dessen Umschaltgeschwindigkeit, weil für einen solchen Umschaltvorgang jeweils die Zeitdauer eines Zeitschlitzes zur Verfügung steht. Wie bereits ausgeführt, wird ein Umschalten des Synthesizers beim Übergang von Senden auf Empfangen und umgekehrt in bestimmten Grenzgebieten eines solchen Funknetzes dann erforderlich, wenn der vorgegebene Frequenzabstand eines Frequenzkanalpaares nicht eingehalten werden kann und deshalb für die Übertragungseinrichtung von der mobilen Teilnehmerstation TLN zum Funkkonzentrator FUKO eine andere Radiofrequenz verwendet werden muss. Die Änderung des Frequenzabstandes bei einen Frequenzkanalpaar wird grundsätzlich nur durch Ändern der Radiofrequenz für die Übertragungsrichtung und Übertragungsdauer von der mobilen Teilnehmerstation zum Funkkonzentrator vorgenommen, um auf diese Weise den mobilen Teilnehmerstationen zu ermöglichen, die Funkkonzentratoren in den Zeitschlitzen der aufeinanderfolgenden Rahmen auch in solchen Grenzgebieten stets auf der innerhalb des Funknetzes vorgegebenen Radiofrequenz des Organisationskanals im Oberband zu empfangen.

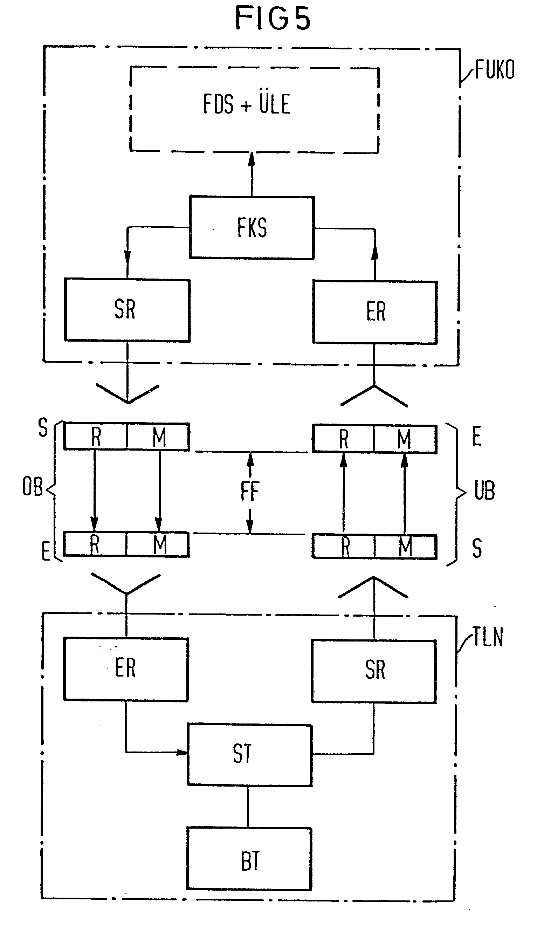

Das in Fig. 5 dargestellte Blockschaltbild veranschaulicht den Verkehr einer mobilen Teilnehmerstation TLN mit einem Funkkonzentrator FUKO. Der Funkkonzentrator weist eine Funkdatensteuerung und eine Überleiteinrichtung FDS + ÜLE auf, die mit der Funkkanalsteuerung FKS zusammenarbeitet. Die Funkkanalsteuerung liefert dem Sender SR im Rhythmus der aufeinanderfolgenden Rahmen RN des Organisationskanals den in einem zugeordneten Zeitschlitz zu übertragenden Informationsblock im Oberband OB. Dieser besteht, wie bereits im Zusammenhang mit Fig. 4 ausgeführt worden ist, aus zwei Teilblöcken, nämlich dem Rufblock R und dem Meldeblock M. Im Rufblock R werden die Verbindungswünsche und im Meldeblock die Meldeaufrufe an die mobilen Teilnehmerstationen TLN über des Funkfeld FF gesendet. Der Empfänger ER der mobilen Teilnehmerstation TLN leitet die empfangenen Informationsblöcke dem Systemsteuerteil ST zu, dem das Bedienteil BT und der Sender SR der Teilnehmerstation nachgeschaltet sind. Der Sender SR der Teilnehmerstation TLN sendet im Unterband UB im Rufblock R Erstmeldungen und Ummeldungen soweit die mobile Teilnehmerstation TLN gesprächsbereit ist, und quittiert im Meldeblock M den Meldeaufruf des Funkkonzentrators. An- und Abmeldung einer Teilnehmerstation sowie der periodisch erfolgende Meldeaufruf und dessen Quittierung erfolgt in der gleichen Weise, wie dies bereits in der genannten DE-B- 26 59 635 ausführlich beschrieben ist.

Da ein Funkkonzentrator FUKO im Regelfall innerhalb eines Rahmens RN lediglich in dem ihm zugeordneten Zeitschlitz den Informationsblock absetzt, kann die gleiche Funkgarnitur auch für das Senden von Informationsblöcken in einem Reservezeitschlitz des gleichen Rahmens verwendet werden und auf diese Weise eine Kapazitätsausweitung eines Funkbereiches herbeiführt werden. Bei erforderlichen Kapazitätsausweitungen von zwei und mehr Funkbereichen sowie bei sehr grossen Kapazitätsausweitungen eines einzelnen Funkbereichs können, wie Fig. 6 zeigt, anstelle eines, zwei Organisationskanäle OK I und OK II vorgesehen werden. Ein eine Kapazitätsausweitung benötigender Funkbereich hat hier die Möglichkeit, neben der Belegung des ihm zugeordneten Zeitschlitzes im Rahmen RN des Organisationskanals OK I weitere Zeitschlitze im Organisationskanl OK II zu belegen. Hierbei

kann diese Mehrfachbelegung wiederum von ein und derselben Funkgarnitur des Funkkonzentrators vorgenommen werden.

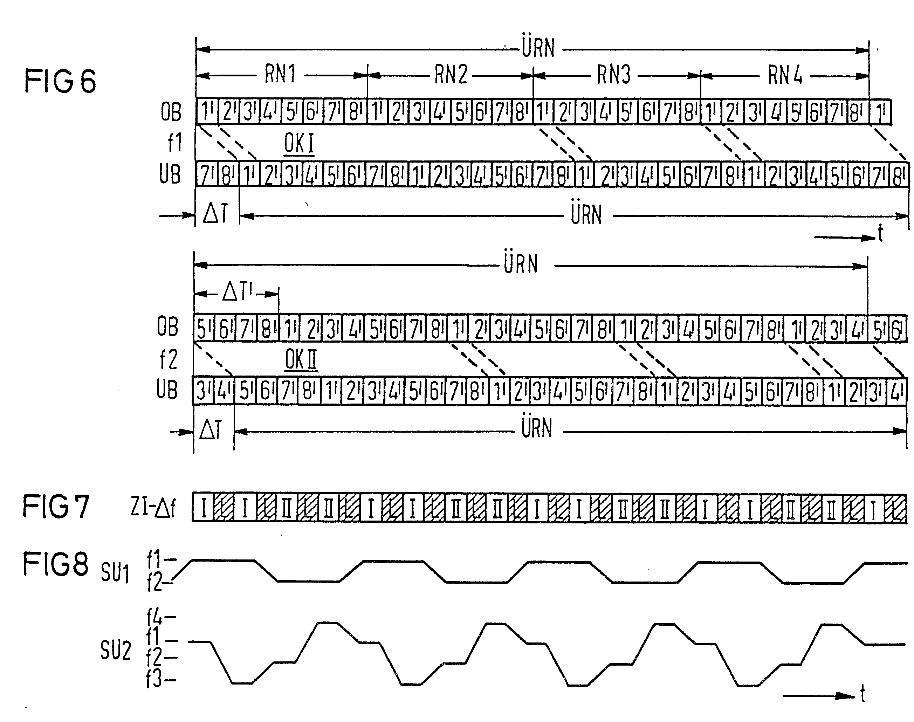

Der Rahmenversatz im Organisationskanal OK I und im Organisationskanal OK II zwischen Oberband OB und Unterband UB beträgt wiederum $\Delta T$. Darüberhinaus haben auch die Rahmen des Organisationskanals OK II gegenüber den Rahmen des Organisationskanals OK I den Zeitversatz $\Delta T'$, der hierbei vier Zeitschlitze umfasst. Auf diese Weise ist es beispielsweise für den Funkbereich 1 möglich, innerhalb einer Rahmenperiode im Organisationskanal OK I und im Organisationskanal OK II jeweils einen Informationsblock 1' im Oberband OB zu senden und im Unterband UB zu empfangen. Entsprechendes gilt für die restlichen der sieben Funkbereiche. Bei diesem Übertragunsschema hat, wie das Diagramm der Zeitintervall-Frequenzumstimmung ZI-$\Delta$f nach Fig. 7 zeigt, der Synthesizer der Funkgarnitur für eine gegebenenfalls erforderliche Umschaltung zwischen Senden und Empfangen innerhalb eines Organisationskanals sowie für die hier stets erforderliche Umschaltung zwischen dem Organisationskanal OK I und dem Organisationskanal OK II jeweils ein Zeitintervall L von der Grösse eines Zeitschlitzes zur Verfügung.

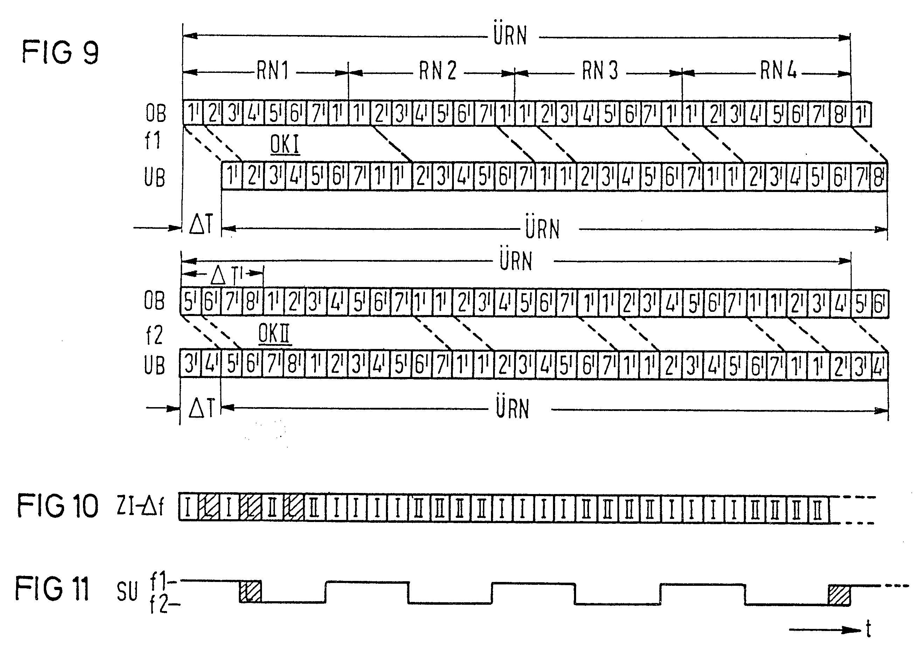

Die Synthesizerumschaltung zwischen den Frequenzen f1 und f2 ist in Diagramm SU1 der Fig. 8 für den Fall dargestellt, dass lediglich eine Umschaltung zwischen den beiden Organisationskanälen erforderlich ist. Das darunter dargestellte Zeitdiagramm SU2 für vier Frequenzen f1, f2, f3 und f4 der Fig. 8 zeigt den Fall, in dem zusätzlich eine Umschaltung in Abhängigkeit eines Überganges von Senden auf Empfangen und umgekehrt innerhalb eines Organisationskanals erforderlich ist.

Der beispielsweise angeführte Funkbereich 1 wird den ihm zusätzlich im Organisationskanal OK II zur Verfügung stehenden Zeitschlitz im allgemeinen erst dann für die Übertragung eines Informationsblockes 1' in Anspruch nehmen, wenn sein Verkehrsaufkommen dies erfordert. Ist seine ihm im Organisationskanal OK I zur Verfügung stehende Kapazität ausgeschöpft, so wird er im Informationsblock 1' dieses Organisationskanals eine Information für sich weiterhin anmeldende Teilnehmerstationen übertragen, die diesen mitteilt, dass sie für die Anmeldung und den weiteren funkorganisatorischen Informationstausch auf den Organisationskanal OK II überwechseln sollen.

Das Fig. 6 entsprechende weitere Ausführungsbeispiel für zwei Organisationskanäle OK I und OK II nach Fig. 9 stellt einen Fall dar, bei dem innerhalb eines Ballungsgebietes, beispielsweise einer Grossstadt, die Kapazitätsbelastung eines Funkbereiches, beim Ausführungsbeispiel der Funkbereich 1, sehr gross ist, und somit für diesen Funkbereich innerhalb einer Rahmenperiode mehr als zwei Zeitschlitze für Senden und zwei Zeitschlitze für Empfang zur Verfügung sein müssen. Beim Ausführungsbeispiel nach Fig. 9 ist dies so gelöst, dass der Funkbereich 1, nunmehr bezogen auf den Überrahmen ÜRN, in den Rahmen RN 1, RN 2 und RN3 jeweils im Reservezeitschlitz zusätzlich einen Informationsblock 1' überträgt und darüberhinaus im Organisationskanal OK II im Rahmen RN1 zusätzlich einen Informationsblock und in den Rahmen RN2, RN3 und RN4 zusätzlich jeweils zwei Informationsblöcke 1' überträgt. Anstelle von normalerweise vier Informationsblöcken 1' innerhalb eines Überrahmens ÜRN stehen also hier dem Funkbereich 1 insgesamt vierzehn Zeitschlitze für die Übertragung von Informationsblöcken zur Verfügung.

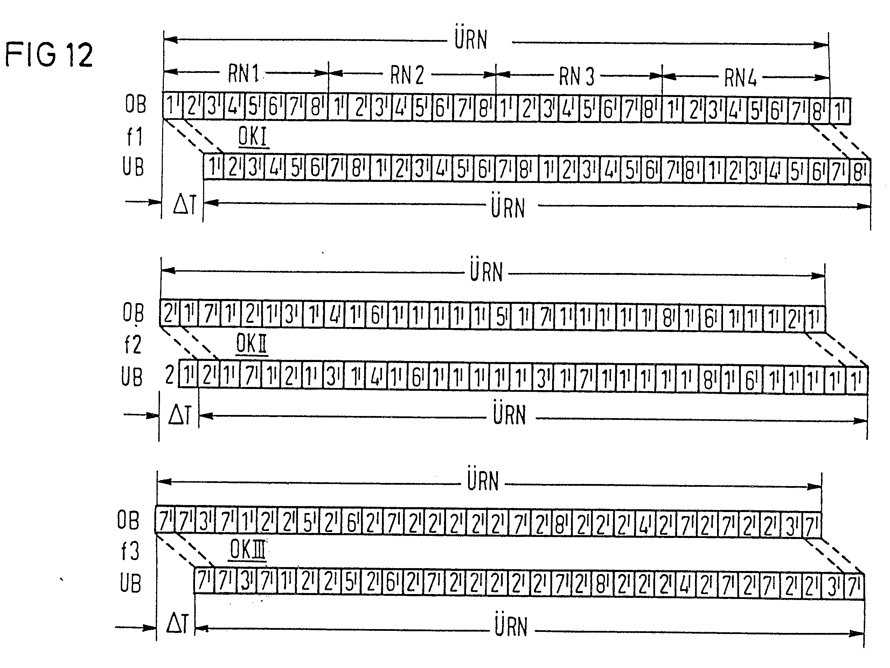

Fig. 10 zeigt wiederum das zugehörige Diagramm ZI-$\Delta$f der Zeitintervall-Frequenzumstimmung der Synthesizer. Hier steht für eine Umschaltung zwischen der Synthesizerfrequenz f1 des Organisationskanals OK I und der Synthesizerfrequenz f2 des Organisationskanals OK II und umgekehrt im allgemeinen kein Zeitintervall in der Grösse eines Zeitschlitzes zur Verfügung. Die Funkgarnitur des Funkkonzentrators muss in diesem Falle entweder mit einem zweiten Synthesizer ausgestattet werden oder aber der Synthesizer muss für eine sehr hohe Umschaltgeschwindigkeit ausgelegt sein. Dieser Sachverhalt wird im Zeitdiagramm SU der Fig. 11, das den Ablauf der Umschaltung zwischen den Frequenzen f1 und f2 darstellt, noch besonders verdeutlicht.

Fig. 12 schliesslich zeigt ein weiteres Ausführungsbeispiel mit drei Organisationskanälen OK I, OK II und OK III. Die Rahmen RN1, RN2, RN3 und RN4, die gemeinsam den Überrahmen ÜRN bilden, sind beim Organisationskanal OK I in ihren ersten sieben Zeitschlitzen mit den Informationsblöcken 1', 2'...7' der Funkbereiche 1, 2..7 der Funkbereichsgruppen FBG1...FBG5 nach Fig. 2 belegt, während der Reservezeitschlitz mit dem Informationsblock 8' für Funkkonzentratoren sehr kleiner Leistung in funkgeografisch schwierigem Gelände belegt ist. Beim Ausführungsbeispiel ist angenommen, dass der Funkbereich 1 einer Funkbereichsgruppe und der Funkbereich 2 einer anderen Funkbereichsgruppe einen Funkkonzentrator aufweisen, wie er für Ballungsgebiete mit grosser Teilnehmerzahl erforderlich ist. Die hierfür erforderliche Kapazitätsausweitung wird für den genannten Funkbereich 1 im zweiten Organisationskanal OK II und für den betreffenden Funkbereich 2 im Organisationskanal OK III berücksichtigt. Wie Fig. 12 zeigt, stehen dem betreffenden Funkbereich 1 für Informationsblöcke 1' im zweiten Organisationskanal OK II einundzwanzig Zeitschlitze zur Verfügung. Entsprechendes gilt für den genannten Funkbereich 2, dem im dritten Organisationskanal OK III für die Übertragung von Informationsblöcken 2' siebzehn Zeitschlitze zur Verfügung stehen. Insgesamt stehen dem genannten Funkbereich 1 in den drei Organisationskanälen sechsundzwanzig Zeitschlitze zur Verfügung. Dies entspricht bei einer Bitrate von 5,28 Kbit/s und einer Länge des Überrahmens von 2400 ms einer maximalen Funkteilnehmerzahl von 3466, die auf diese Weise bedient werden können. Jede Teilnehmerstation kann auf jedem der im Beispiel gezeigten Organisationskanäle die Erreichbarkeit aller Nachbarfunkbereiche überprüfen. Da hier aber in den einzelnen Organisationskanälen teilweise gleichzeitig gesendet und empfangen wird, wird auch bei solchen Grossfunkkonzentratoren für den Betrieb der Organisationskanäle nur eine Funkgarnitur mit unabhängigen Synthesizern für Sender und Empfänger benötigt. Dieser geringe zusätzliche Aufwand wird jedoch nur erforderlich, wenn die Teilnehmerkapazität im Zuge des Ausbaus eines solchen Funknetzes in Ballungsgebieten die Bedienung einer so hohen Anzahl von Teilnehmerstationen erforderlich macht. Ein hervorstechender Vorteil der Erfindung ist, dass mit der Anzahl der verwendeten Organisationskanäle der Steuer- und Umschaltaufwand bei den Teilnehmerstationen nicht ansteigt. Der Teilnehmerstation dwird der Übergang auf einen anderen Organisationskanal mittels der systemeigenen Signalisierung vom Funkkonzentrator mitgeteilt.

**Patentansprüche**

1. Mobiles Funknetz (FN) mit netzweiter Synchronisation mit einer Anzahl Funkkonzentratoren (FUKO) in gegenseitiger räumlicher Anordnung nach Art eines Cellularsystems mit sich überlappenden Funkbereichen (1, 2...7), die durch die ihnen im Rahmen des Cellularsystems zugeteilten Frequenzkanäle bestimmt sind, bei dem jeweils eine fest vorgegebene Anzahl von einander unmittelbar benachbarten Funkbereichen (1, 2...7) eine Funkbereichsgruppe (FBG) bilden, in denen sich die insgesamt zur Verfügung stehenden Frequenzkanäle wiederholen, bei dem ferner der Frequenzverteilungsplan für die Funkkonzentratoren (FUKO) so festgelegt ist, dass Gleichkanalstörungen im jeweiligen Funkbereich einschliesslich einer erweiterten Randzone weitgehend ausgeschlossen sind, und bei dem wenigstens die Signalisierung in digitaler Form zwischen den ortsfesten Funkkonzentratoren (FUKO) und den beweglichen Teilnehmerstationen (TLN) über für Duplexbetrieb ausgelegte Organisationskanäle (OK) vorgenommen ist, dadurch gekennzeichnet, dass den Funkkonzentratoren (FUKO) mehrerer Funkbereichsgruppen (FBG) wenigstens ein Organisationskanal (OK) gemeinsam zugeordnet ist, der als Mehrfachzugriffkanal mit einem periodischen Rahmen (RN1...RN4) gestaltet ist,dass ferner dieser Rahmen wenigstens eine der Anzahl der Funkbereiche (1, 2...7) einer Funkbereichsgruppe (FBG) entsprechende Zahl aufeinanderfolgender Zeitschlitze (S1...S8) umfasst und jeder der Zeitschlitze (S1...S8) gleichzeitig einem solchen Funkbereich (1, 2...7) mehrerer Funkbereichsgruppen (FBG1...FBG5) für die Übermittlung funkbereichsbezogener Informationsblöcke (1', 2'...8') zugeordnet ist, der gegenüber dem entsprechenden Funkbereich der anderen Funkbereichsgruppen funktechnisch ausreichend entkoppelt ist.

2. Mobiles Funknetz nach Anspruch 1, dadurch gekennzeichnet, dass die Anzahl der Zeitschlitze (S1...S8) eines Rahmens (RN1...RN4) des Organisationskanals (OK) die Anzahl der Funkbereiche (1, 2...7) einer Funkbereichsgruppe (FBG) übersteigt.

3. Mobiles Funknetz nach Anspruch 1 oder 2, dadurch gekennzeichnet, dass die aufeinanderfolgenden Rahmen (RN1..RN4) des Organisationskanals (OK) in der einen Übertragungsrichtung von denen in der anderen Übertragungsrichtung einen gegenseitigen Zeitversatz (ΔT) aufweisen, der die Grösse eines Zeitschlitzes (S1...S8) übersteigt.

4. Mobiles Funknetz nach Anspruch 3, dadurch gekennzeichnet, dass der gegenseitige Zeitversatz (ΔT) zwei Zeitschlitze (S1...S8) gross ist.

5. Mobiles Funknetz nach einem der vorhergehenden Ansprüche, dadurch gekennzeichnet, dass jede Funkbereichsgruppe (FBG1...FBG5) sieben Funkbereiche (1, 2...7) und jeder Rahmen (RN1...RN4) des Organisationskanals (OK) acht gleichlange Zeitschlitze (S1...S8) aufweist.

6. Mobiles Funknetz nach einem der vorhergehenden Ansprüche, dadurch gekennzeichnet, dass die in den Zeitschlitzen (S1...S8) einer Rahmenperiode des Organisationskanals (OK) übertragenen funkbereichsbezogenen Informationsblöcke (1', 2'...8') sich aus einem die verkehrsspezifische Signalisierung enthaltenden Rufblock (R) und einem die Signalisierung für die Anwesenheitprüfung enthaltenden Meldeblock (M) zusammensetzen.

7. Mobiles Funknetz nach einem der vorhergehenden Ansprüche, dadurch gekennzeichnet, dass zwei und mehr aufeinanderfolgende Rahmen (RN1...RN4) des Organisationskanals (OK) einen Überrahmen (ÜRN) darstellen.

8. Mobiles Funknetz nach einem der vorhergehenden Ansprüche, dadurch gekennzeichnet, dass ein Funkbereich (1, 2...7) einer Funkbereichsgruppe (FBG1...FBG5) zur Kapazitätsausweitung innerhalb eines Rahmens (RN1...RN4) bzw. Überrahmens (ÜRN) mehr als einen bzw. mehr als vier Zeitschlitze (S1...S8) mit Informationsblöcken (1', 2'...8') belegen kann.

9. Mobiles Funknetz nach einem der vorhergehenden Ansprüche, dadurch gekennzeichnet, dass der Organisationskanal von einer bei einem Funkbereich (1, 2...7) angemeldeten Teilnehmerstation (TLN) ausser in dem diesem Funkbereich zugeordneten Zeitschlitz (S1...S7) auch in den übrigen Zeitschlitzen zur Erkennung von Trends hinsichtlich der Erreichbarkeit benachbarter Funkbereiche und zur gegebenenfalls erforderlichen Ummeldung zu einem anderen Funkbereich abhört.

10. Mobiles Funknetz nach einem der vorhergehenden Ansprüche, dadurch gekennzeichnet, dass bei Verwendung von zwei oder mehr Organisationskanälen (OK I, OK II, OK III) mit gleichem Rahmen (RN1...RN4) bzw. Überrahmen (ÜRN) ein Funkbereich (1, 2...7) bei Erreichen seiner vollen Kapazitätsauslastung innerhalb des bzw. der ihm in einem Organisationskanal (OK I, OK II, OK III) zugeordneten Zeitschlitze (S1...S8) in diesen Zeitschlitzen eine Signalinformation überträgt, die einer sich anmeldenden Teilnehmerstation (TLN) mitteilt, auf welchen weiteren Organisationskanal sie für die Anmeldung und den weiteren funkorganisatorischen Informationsaustausch überwechseln soll.

11. Mobiles Funknetz nach Anspruch 10, dadurch gekennzeichnet, dass die Rahmen (RN1...RN4) der zwei und mehr Organisationskanäle (OK I, OK II, OK III) einen gegenseitigen Zeitversatz (ΔT') aufweisen und dass innerhalb einer Rahmenperiode zwei und mehr einem Funkbereich (1, 2...7) einer Funkbereichsgruppe (FBG1...FBG5) zugehörigen Informationsblöcke (1', 2'...8') in zeitlich voneinander getrennten Zeitschlitzen der zwei und mehr Organisationskanäle übertragen sind.

12. Mobiles Funknetz nach Anspruch 10 oder 11, dadurch gekennzeichnet, dass zwischen den die Informationsblöcke (1', 2'...8') eines bestimmten Funkbereiches (1, 2...7) innerhalb einer Rahmenperiode enthaltenden Zeitschlitze (S1...S8) von zwei und mehr Organisationskanälen (OK I, OK II, OK III) jeweils eine Zeitlücke (L), beispielsweise in der Grösse eines Zeitschlitzes, vorhanden ist.

13. Mobiles Funknetz nach einem der vorhergehenden Ansprüche, dadurch gekennzeichnet, dass die beiden Frequenzen (f1/f2, f3/f4) des jedem Organisationskanal (OK I, OK II, OK III) für beide Übertragungsrichtungen zugeordneten Frequenzkanalpaares einen vorgegebenen, für alle Frequenzkanalpaare gleichen gegenseitigen Abstand haben und dass eine aus lokalen funktechnischen Gegebenheiten erzwungene Änderung dieses vorgegebenen Frequenzabstandes bei einem Frequenzkanalpaar ausschliesslich durch eine Änderung der für die Richtung vom Funkteilnehmer zum Funkkonzentrator vorgesehenen Frequenz herbeigeführt ist.

**Claims**

1. A mobile radio network (FN) featuring network-wide synchronisation, with a number of radio concentrators (FUKO) mutually arranged in the manner of a cellular system with overlapping radio ranges (1, 2...7) which are determined by the frequency channels which they are allocated in the framework of the cellular system, wherein a predetermined number of radio ranges (1, 2...7) immediately adjacent each other form a group of radio ranges (FBG) in which the frquency channels available overall are repeated, wherein moreover the frequency distribution plan for the radio concentrators (FUKO) is specified to be such that same-channel interference in the radio range in question, including an extended edge zone, are largely eliminated, and wherein at least the signalling in digital form is carried out between the stationary radio concentrators (FUKO) and the mobile subscriber stations (TLW) via organisation channels (OK) designed for duplex operation, characterised in that the radio concentrators (FUKO) of a plurality of radio range groups (FBG) are commonly assigned at least one organisation channel (OK) which represents a multiple access channel with a periodic frame (RN1...RN4), that moreover this frame includes at least a number of consecutive time slots (S1...S8) corresponding to the number of radio ranges (1, 2...7) within a group of radio ranges (FBG), and each of the time slots (S1...S8) is simultaneously assigned, for the transfer of radio range-related information blocks (1', 2'...8'), to a radio range (1, 2...7) in a plurality of radio range groups (FBG1...FBG5) which is adequately decoupled in terms of radio technology from the corresponding radio range of the other radio range groups.

2. Mobile radio network as claimed in claim 1, characterised in that the number of the time slots (S1...S8) of a frame (RN1...RN4) of the organisation channel (OK) exceeds the number of radio ranges (1, 2...7) within a radio range group (FBG).

3. Mobile radio network as claimed in claim 1 or 2, characterised in that the consecutive frames (RN1...RN4) of the organisation channel (OK) in one direction of transmission exhibit a mutual time shift ($\Delta T$) from those in the other direction of transmission, which time shift exceeds the size of one time slot (S1...S8).

4. Mobile radio network as claimed in claim 3, characterised in that the mutual time shift ($\Delta T$) amounts to two time slots (S1...S8).

5. Mobile radio network as claimed in one of the preceding claims, characterised in that each radio range group (FBG1...FBG5) includes seven radio ranges (1, 2...7), and each frame (RN1...RN4) of the organisation channel (OK) includes eight time slots (S1...S8) of equal length.

6. Mobile radio network as claimed in one of the preceding claims, characterised in that the radio-range-related information blocks (1', 2'...8') which are transmitted in the time slots (S1..S8) of a frame period of the organisation channel (OK) comprise a ringing block (R) which includes the traffic-specific signalling and an answer block (M) which includes the signalling for presence checking.

7. Mobile radio network as claimed in one of the preceding claims, characterised in that two and more consecutive frames (RN1...RN4) of the organisation channel (OK) represents a superframe (ÜRN).

8. Mobile radio network as claimed in one of the preceding claims, characterised in that in order to expand capacity within a frame (RN1...RN4) and within a superframe (ÜRN) a radio range (1, 2...7) of a radio range group (FBG1...FBG5) can fill more than one and more than four time slots (S1...S8) respectively with information blocks (1', 2'...8').

9. Mobile radio network as claimed in one of the preceding claims, characterised in that in order to recognise trends relating to the accessibility of adjacent radio ranges and where necessary to re-register with another radio range, the organisation channel listens in from a subscriber station (TLN) which has registered with a radio range 1, 2...7), not only in the time slot (S1...S8) assigned to this radio range but also in the other time slots.

10. Mobile radio network as claimed in one of the preceding claims, characterised in that when two or more organisation channels (OK I, OK II, OK III) are used with the same frame (RN1...RN4) or superframe (ÜRN), a radio range (1, 2...7), having reached its full capacity load within the time slot or slots (S1...S8) which it is assigned in an organisation channel (OK I, OK II, OK III), transmits in these time slots an item of signal information which communicates to a registering subscriber station (TLN) which further organisation channel it is to change to for registering and for the exchange of further information relating to radio organisation.

11. Mobile radio network as claimed in claim 10, characterised in that the frames (RN...RN4) of the two and more organisation channels (OK I, OK II, OK III) exhibit a mutual time shift ($\Delta T$), and that within a frame period two and more information blocks (1', 2'..8') assigned to a radio range (1, 2...7) of a radio range group (FBG1...FBG5) are transmitted in time slots, separated from one another in respect of time, of the two and more organisation channels.

12. Mobile radio network as claimed in claim 10 or 11, characterised in that between the time slots (S1...S8), which contain the information blocks (1', 2'...8') of a specific radio range (1, 2...7) within a frame period, of two and more organisation channels (OK I, OK II, OK III) there is a time gap (L), for example of the order of one time slot.

13. Mobile radio network as claimed in one of the preceding claims, characterised in that the two frequencies (f1/f2, f3/f4) of the pair of frequency channels assigned to each organisation channel (OK I, OK II, OK III) for both directions of transmission have a predetermined mutual spacing which is identical for all the pairs of frequency channels, and that a change in this predetermined frequency spacing in the case of a pair of frequency channels, necessitated by local radio technology factors, is effected exclusively by changing the frequency provided for the direction from radio subscriber to radio concentrator.

## Revendications

1. Réseau radio mobile (FN) comportant un nombre de concentrateurs hertziens (FUKO) situés dans une disposition spatiale réciproque à la façon d'un système cellulaire comportant des régions de radiocommunications (1, 2...7) en recouvrement, qui leur sont déterminées par les canaux de fréquencens qui leur sont associés dans le cadre du système cellulaire, et dans lequel un nombre prédéterminé, de façon fixe, de région de radiocommunications (1, 2...7), qui sont directement voisines les unes des autres et dans lesquelles les canaux de fréquence globalement disponibles se répètent, forment un groupe (SBG) de régions de radiocommunications et dans lequel en outre le plan d'attribution des fréquences pour les concentrateurs hertziens (FUKO) est fixé de telle sorte que des interférences par canal commun dans la région respective de radiocommunications ainsi que dans une zone marginale étendue sont exclues dans une large mesure et dans lequel au moins la signalisation sous forme numérique est réalisée entre les concentrateurs hertziens (FUKO) fixes et les postes d'abonné mobiles (TLN) par l'intermédiaire de canaux d'organisation (OK) conçus pour le fonctionnement en duplex, caractérisé par le fait qu'aux concentrateurs hertziens (FUKO) de plusieurs groupes (FBG) de régions de radiocommunications est associé au moins en commun un canal d'organisation (OK) qui est réalisé sous la forme d'un canal à accès multiples comportant une trame périodique (RN1...RN4) et qu'en outre cette trame englobe au moins un nombre de créneaux temporels successifs (S1...S8) correspondant au nombre des régions de radiocommunications (S1...7) d'un groupe (FBG) de régions de radiocommunications et que chacun des créneaux temporels (S1...S8) est associé simultanément, pour la retransmission de blocs d'informations (1', 2',...8') relatifs aux régions de radiocommunications, à une telle région de radiocommunications (1, 2...7) de plusieurs groupes (FBG1...FBG5) de régions de radiocommunications, qui est suffisamment découplée du point de vue de la technique des radiocommunications par rapport à la région de radiocommunications correspondante de l'autre groupe de régions de radiocommunications.

2. Réseau radio mobile suivant la revendication 1, caractérisé par le fait que le nombre des créneaux temporels (S1...S8) d'une trame (RN1...RN4) du canal d'organisation (OK) est supérieur au nombre de régions de radiocommunications (1, 2...7) d'un groupe (FBG) de radiocommunications.

3. Réseau radio mobile suivant la revendication 1 ou 2, caractérisé par le fait que les trames successives (RN1...RN4) du canal d'organisation (OK) dans un sens de transmission possèdent par rapport aux trames présentes dans l'autre sens de transmission, un décalage temporel réciproque ($\Delta T$) qui dépasse la grandeur d'un canal temporel (S1...S8).

4. Réseau radio mobile suivant la revendication 3, caractérisé par le fait que le décalage temporel réciproque ($\Delta T$) de deux créneaux temporels (S1...S8) est important.

5. Réseau radio mobile suivant l'une des revendications précédentes, caractérisé par le fait que chaque groupe (FBG1...FBG5) de régions de radiocommunication comporte sept régions de radiocommunications (1, 2...7) et que chaque trame (RN1...RN4) du canal d'organisation (OK) comporte huit créneaux temporels (S1...S8) de même longueur.

6. Réseau radio mobile suivant l'une des revendications précédentes, caractérisé par le fait que les blocs d'informations (1', 2'...8'), qui sont associés aux régions de radiocommunications et sont transmis dans les créneaux temporels (S1...S8) d'une période de trame du canal d'organisation (OK), se composent d'un bloc d'appel (R) contenant la signalisation spécifique au trafic, et d'un bloc de signalisation (M) contenant la signalisation pour le contrôle de présence.

7. Réseau radio mobile suivant l'une des revendications précédentes, caractérisé par le fait que deux et un plus grand nombre de trames successives (RN1...RN4) du canal d'organisation (OK) constituent une trame d'ordre supérieur (URN)

8. Réseau radio mobile suivant l'une des revendications précédentes, caractérisé par le fait qu'une région de radiocommunications (1, 2...7) d'un groupe (SBG1...SBG5) de régions de radiocommunications peut occuper, une vue d'accroître la capacité à l'intérieur d'une trame (RN1...RN4) ou d'une trame d'ordre supérieur (URN), plus d'un ou plus de quatre créneaux temporels (S1...S8) avec des blocs d'informations (1', 2'...8').

9. Réseau radio mobile suivant l'une des revendications précédentes, caractérisé par le fait que le canal d'organisation d'un poste d'abonné (TLN), demandé dans une région de radiocommunications (1, 2...7), écoute non seulement dans le créneau temporel (S1...S7) associé à cette région de radiocommunication, mais également dans les autres créneaux temporels afin d'identifier des tendances concernant la possibilité d'accès à des régions de radiocommunications voisines et pour réaliser la conversion éventuellement nécessaire de signalisation en direction d'une autre région de radiocommunications.

10. Réseau radio mobile suivant l'une des revendications précédentes, caractérisé par le fait que dans le cas de l'utilisation de deux ou d'un plus grand nombre de canaux d'organisation (OK I, OK II, OK III) avec une même trame (RN 1...RN4) ou une même trame d'ordre supérieur (URN), lorsqu'une région de radiocommunications (1, 2...7) a atteint sa pleine capacité de travail à l'intérieur du ou des créneaux temporels (S1...S8) qui lui sont associés dans un canal d'organisation (OK I, OK II, OK III), cette région transmet dans ces créneaux temporels un signal d'information qui indique à un poste d'abonné (TLN) qui se signale, dans quel autre canal d'organisation il doit passer pour la demande et la poursuite de l'échange d'information organisé pour les radiocommunications.

11. Réseau radio mobile suivant la revendication 10, caractérisé par le fait que les trames (RN1...RN4) et deux ou un plus grand nombre de canaux d'organisation (OK I, OK II, OK III) présentent un décalage temporel réciproque ($\Delta t'$) et qu'à l'intérieur d'une période de trame, deux et un plus grand nombre de blocs d'informations (1', 2'...8') associés à une région de radiocommunications (1, 2...7) d'un groupe (FBG1...FBG5) de régions de radiocommunications sont transmis dans des créneaux temporels, séparés les uns des autres dans le temps, des deux ou du plus grand nombre de canaux d'organisation.

12. Réseau radio mobile suivant la revendication 10 ou 11, caractérisé par le fait qu'entre les créneaux temporels (S1...S8), contenant les blocs d'informations (1', 2'...8') d'une région de radiocommunications (1, 2...7) déterminée à l'intérieur d'une période de trame, de deux ou d'un plus grand nombre de canaux d'organisation (OK I, OK II, OK III) il existe respectivement un intervalle de temps (L), par exemple d'une taille de l'ordre d'un créneau temporel.

13. Réseau radio mobile suivant l'une des revendications précédentes, caractérisé par le fait que les deux fréquences (f1/f2, f3/f4) du couple de canaux de fréquences, associé à chaque canal d'organisation (OK I, OK II, OK III) pour les deux sens de transmission, sont à un écartement réciproque prédéterminé identique pour tous les couples de canaux de fréquences, et qu'une modification, imposée dans des conditions locales techniques de radiocommunications, de cet écart prédéterminé des fréquences est réalisé, dans le cas d'un couple de canaux de fréquences, exclusivement par une modification de la fréquence prévue pour la direction allant de l'abonné radio mobile au concentrateur hertzien.

# FIG 1

FBG

# FIG 2

FBG 5

FBG 1

FN

FBG 4

FBG 2

FBG 3

# FIG 3

| OK | 1' | 2' | 3' | 4' | 5' | 6' | 7' | 8' | 1' | 2' | 3' | 4' | 5' | 6' | 7' | 8' | ---- | 8' |

|←————————— RN1 —————————→|←————————— RN2 —————————→|←RN3→|←RN4→|

| S1 | S2 | S3 | S4 | S5 | S6 | S7 | S8 | S1 | S2 | S3 | S4 | S5 | S6 | S7 | S8 | ---- | S8 |

|←————————————————————————— ÜRN —————————————————————————→|

t

## FIG 4

0 036 146

ÜRN

RN1    RN2

FUKO

S
OB
E

R M R M R M R M R M R M R M R M R M R M R M R M R M R M R M R M R M

1' | 2' | 3' | 4' | 5' | 6' | 7' | 8' | 1' | 2' | 3' | 4' | 5' | 6' | 7' | 8' | 1'

R M R M R M R M R M R M R M R M R M R M R M R M R M R M R M R M R M

TLN

TLN

S
UB
E

R M R M R M R M R M R M R M R M R M R M R M R M R M R M R M R M R M

1' | 2' | 3' | 4' | 5' | 6' | 7' | 8' | 1' | 2' | 3' | 4' | 5' | 6' | 7'

R M R M R M R M R M R M R M R M R M R M R M R M R M R M R M R M R M

FUKO

RN1    RN2

ΔT    ÜRN

FIG 5

FIG 6

ÜRN

| RN1 | RN2 | RN3 | RN4 |

OB | 1 2 3 4 5 6 7 8 | 1 2 3 4 5 6 7 8 | 1 2 3 4 5 6 7 8 | 1 2 3 4 5 6 7 8 | 1

f1    OK I

UB | 7 8 1 2 3 4 5 6 7 1 2 3 4 5 6 7 8 1 2 3 4 5 6 7 8 1 2 3 4 5 6 7 8 |

ΔT    ÜRN    t

ÜRN

ΔT'

OB | 5 6 7 8 1 2 3 4 5 6 7 8 1 2 3 4 5 6 7 8 1 2 3 4 5 6 7 8 1 2 3 4 5 6 |

f2    OK II

UB | 3 4 5 6 7 8 1 2 3 4 5 6 7 8 1 2 3 4 5 6 7 8 1 2 3 4 5 6 7 8 1 2 3 4 |

ΔT    ÜRN

FIG 7   ZI-Δf | I II I II II I II I I II II I II I I II I I II II I II I |

FIG 8 SU1 f1 / f2

SU2 f4 / f1 / f2 / f3

t

0 036 146

FIG 9

FIG 10  ZI-Δf

FIG 11  SU f1 / f2

0 036 146

FIG 12